# EUROPEAN PATENT APPLICATION

(11) **EP 4 576 343 A1**
(43) Date of publication of application: **25.06.2025**
(21) Application number: 22959874.3
(22) Date of filing: 27.09.2022
(51) Int. Cl.: H01M 50/10, H01M 50/147

(54) **BATTERY CELL, BATTERY AND ELECTRICAL DEVICE**

(71) Applicant: Contemporary Amperex Technology Co., Limited, Ningde, Fujian 352100 (CN)
(72) Inventor: ZHANG, Qianqian, Ningde, Fujian 352100 (CN); XU, Liangfan, Ningde, Fujian 352100 (CN); ZHOU, Wenlin, Ningde, Fujian 352100 (CN); LI, Xing, Ningde, Fujian 352100 (CN); NIU, Shaojun, Ningde, Fujian 352100 (CN)
(74) Representative: Ziebig Hengelhaupt Intellectual Property Attorneys Patentanwaltskanzlei PartGmbB
(86) International application number: PCT/CN2022/121908
(87) International publication number: WO 2024/065225

(57) **Abstract**

Embodiments of the present application provide a battery cell, a battery and an electrical apparatus. The battery cell includes a case, an electrode assembly, an end cover, a fixing member, an insulating plate, and a barrier member. The case has an opening. The electrode assembly is accommodated in the case. The end cover is configured to cover the opening and is connected to the case. The fixing member is arranged on one side of the end cover facing the electrode assembly and is connected to the end cover. The insulating plate is at least partially arranged between the electrode assembly and the case. The insulating plate is connected to the fixing member. The barrier member is connected to at least one of the end cover and the barrier member. The barrier member is configured to isolate at least a portion of the insulating plate from the connection position between the end cover and the case. By arranging the barrier member to isolate the insulating plate from the connection position, the position where the case is connected to the end cover can be in a relatively independent environment, so that interference of the insulating plate to the connection position can be reduced, and connection quality between the case and the end cover can be improved, thereby improving quality of the battery.

## Description

### TECHNICAL FIELD

The present application belongs to the technical field of batteries, and in particular, to a battery cell, a battery, and an electrical apparatus.

### BACKGROUND

As the consumption of natural resources and damage to the environment become increasingly serious, in various fields, there is a growing interest in apparatuses that can store energy and effectively utilize the stored energy. A battery cell is a system that can be combined with each other to utilize new renewable energy.

In the development of a battery technology, how to enhance battery safety is a technical problem urgently to be solved in the battery technology.

### SUMMARY OF THE INVENTION

Embodiments of the present application provide a battery cell, a battery and an electrical apparatus, which can improve safety.

In a first aspect of the embodiments of the present application, there is provided a battery cell, including a case, an electrode assembly, an end cover, a fixing member, an insulating plate, and a barrier member. The case has an opening. The electrode assembly is accommodated in the case. The end cover is configured to cover the opening and is connected to the case. The fixing member is arranged on one side of the end cover facing the electrode assembly and is connected to the end cover. The insulating plate is at least partially arranged between the electrode assembly and the case. The insulating plate is connected to the fixing member. The barrier member is connected to at least one of the end cover and the barrier member. The barrier member is configured to isolate at least a portion of the insulating plate from the connection position between the end cover and the case.

With the above structure, by arranging the barrier member to isolate the insulating plate from the connection position, the position where the case is connected to the end cover can be in a relatively independent environment, interference of the insulating plate to the connection position can be reduced, and connection quality between the case and the end cover can be improved. For example, when the case and the end cover are connected by welding, the insulating plate can be prevented from affecting a welding process, and a risk of poor welding between the case and the end cover can be significantly reduced, thereby improving quality of a battery.

**In** some optional embodiments of the present application, one end of the insulating plate facing the end cover has a first connecting portion, the first connecting portion is arranged around the fixing member and connected to the fixing member, and at least a portion of the barrier member is located on one side of the first connecting portion away from the fixing member.

With the above structure, by arranging the first connecting portion, the connection of the insulating plate to the fixing member can be facilitated, and an effect of the insulating plate isolating the electrode assembly from the case can be improved. Furthermore, by arranging the barrier member on the side of the first connecting portion away from the fixing member, the first connecting portion can be isolated from the case, thereby preventing the first connecting portion from interfering with the connection position.

In some optional embodiments of the present application, the fixing member includes a fixing body and a second connecting portion arranged around the periphery of the fixing body, and the first connecting portion is arranged around the second connecting portion and is fixed to the second connecting portion.

With the above structure, by arranging the second connecting portion, a connecting structure can be formed on the fixing member, thereby facilitating the connection of the first connecting portion to the fixing member.

In some optional embodiments of the present application, the barrier member is a protrusion extending along the thickness direction of the end cover.

With the above structure, by setting the barrier member as a protrusion extending along the thickness direction of the end cover, the barrier member is relatively simple in structure, and an internal structure of the battery cell can be optimized.

In some optional embodiments of the present application, in the thickness direction of the end cover, the size of the second connecting portion is H1, the size of the barrier member is H2, satisfying 0<H2/H1 ≤ 1.

With the above structure, by limiting the size of the barrier member in the thickness direction, the size of the barrier member in the thickness direction can be prevented from being too small and failing to achieve a barrier effect on the insulating plate, and furthermore, the size of the barrier member in the thickness direction does not exceed the size of the fixing member, and the size of the barrier member in the thickness direction can also be prevented from being too large and causing interference to the electrode assembly.

In some optional embodiments of the present application, the barrier member and the case are spaced apart from each other.

With the above structure, by spacing the barrier member and the case apart from each other, a certain redundant space can be present between the barrier member and the case, thereby reducing the interference of the barrier member to the connection position.

In some optional embodiments of the present application, along a first direction, a distance from the insulating plate to the case is L1, a distance from one side of the barrier member close to the case to the insulating plate is L2, satisfying 0.02 ≤ L2/L1<1, and the first direction is perpendicular to the thickness direction of the end cover.

With the above structure, by limiting the size of the barrier member in the first direction, the barrier member has a certain thickness in the first direction to prevent the barrier member from being too thin, resulting in insufficient strength of the barrier member, and furthermore, the thickness of the barrier member in the first direction is smaller than the redundancy between the case and the insulating plate to prevent the barrier member from being too large and squeezing the insulating plate and the case on both sides.

In some optional embodiments of the present application, the barrier member completely surrounds the fixing member.

With the above structure, by arranging the barrier member to completely surround the fixing member, the barrier member is arranged on a whole peripheral side of the fixing member, and the whole peripheral side of the insulating plate can be isolated from the connection position, thereby effectively improving an isolation effect.

In some optional embodiments of the present application, there are a plurality of barrier members, and the plurality of barrier members are arranged at intervals along the circumferential direction of the fixing member.

With the above structure, by arranging the plurality of barrier members at intervals, the barrier members can be arranged locally according to the actual use of a battery cell, thereby realizing an isolation effect between the insulating plate and the connection position while reducing the occupation of the barrier members on an internal space of the battery cell.

In some optional embodiments of the present application, the barrier member and the fixing member are integrally molded.

With the above structure, by integrally molding the barrier member and the fixing member, a number of parts of the battery cell can be reduced, thereby facilitating assembly of the battery cell.

In some optional embodiments of the present application, the barrier member and the end cover are integrally molded.

With the above structure, by integrally molding the barrier member and the end cover, a number of parts of the battery cell can be reduced, thereby facilitating assembly of the battery cell.

In some optional embodiments of the present application, the fixing member is made of an insulating material.

With the above structure, by setting the fixing member to be made of the insulating material, insulativity of one side of the end cover of the battery can be improved.

In a second aspect of embodiments of the present application, there is provided a battery, including the above-mentioned battery cell.

In a third aspect of embodiments of the present application, there is provided an electrical apparatus, including the above-mentioned battery cell, configured to supply electric energy.

Compared with the related art, in the battery cell, battery and electrical apparatus according to the embodiments of the present application, the barrier member is arranged to isolate the insulating plate from the connection position, so that the position where the case is connected to the end cover can be in the relatively independent environment, the interference of the insulating plate to the connection position can be reduced, and the connection quality between the case and the end cover can be improved. For example, when the case and the end cover are connected by welding, the insulating plate can be prevented from affecting the welding process, and the risk of poor welding between the case and the end cover can be significantly reduced, thereby improving the quality of the battery.

### DESCRIPTION OF THE DRAWINGS

In order to illustrate the technical solutions of the embodiments of the present application more clearly, the drawings required in the embodiments of the present application will be briefly introduced below. Obviously, the drawings described below are only some embodiments of the present application. For those of ordinary skill in the art, other drawings can also be obtained according to the drawings without any creative effort.
FIG. 1 is a schematic diagram of a structure of a vehicle according to some embodiments of the present application.
FIG. 2 is a schematic diagram of a structure of a battery according to some embodiments of the present application.
FIG. 3 is a schematic diagram of a structure of a battery cell according to some embodiments of the present application.
FIG. 4 is a schematic diagram of a cross-sectional structure of a battery cell according to some embodiments of the present application.
FIG. 5 is a schematic diagram of a structure of portion A in FIG. 4 in some embodiments.
FIG. 6 is a schematic diagram of a structure of portion A in FIG. 4 in some other embodiments.
FIG. 7 is a schematic diagram of a structure of a fixing member according to some embodiments of the present application.
FIG. 8 is a schematic diagram of a structure of a fixing member according to some other embodiments of the present application.

In the drawings:
1000, vehicle; 100, battery; 110, box body; 111, first box body portion; 112, second box body portion; 200, controller; 300, motor; 10, battery cell; 20, connection position; 201, first portion; 202, second portion; 120, case; 121, opening; 130, electrode assembly; 31, tab; 32, main body portion; 141, end cover; 142, fixing member; 421, fixing body; 422, second connecting portion; 143, barrier member; 431, barrier body; 432, third connecting portion; 144, electrode terminal; 145, pressure relief mechanism; 150, insulating plate; 501, first connecting portion; 160, adapter plate.

### DETAILED DESCRIPTION

Embodiments of the technical solutions of the present application will be described in detail below with reference to the drawings. The following embodiments are only used to more clearly illustrate the technical solution of the present application, and therefore are only used as examples and cannot be used to limit the scope of protection of the present application.

Unless otherwise defined, all technical and scientific terms used herein have the same meaning as commonly understood by those skilled in the art belonging to the technical field of the present application. The terms used herein are intended only for the purpose of describing specific embodiments and are not intended to limit the present application. The terms "comprising", "including" and "having" and any variations thereof in the specification and the claims of the present application and in the description of drawings above are intended to cover non-exclusive inclusion.

In the description of the embodiments of the present application, the technical terms "first", "second", and the like are used only to distinguish between different objects, and are not to be understood as indicating or implying a relative importance or implicitly specifying a number, a particular order, or a primary or secondary relationship of the technical features indicated.

Reference to "embodiment" herein means that a particular feature, structure or characteristic described in conjunction with an embodiment may be included in at least one embodiment of the present application. The appearances of the phrase in various places in the specification neither necessarily refer to a same embodiment, nor are independent or alternative embodiments mutually exclusive with other embodiments. Those skilled in the art understand, both explicitly and implicitly, that the embodiments described herein may be combined with other embodiments.

In the description of the embodiments of the present application, the term "and/or" is only an association relationship for describing associated objects, indicating that there may be three relationships, for example A and/or B may represent three situations: A exists alone, both A and B exist, and B exists alone. In addition, the character "/" herein generally represents that previous and next associated objects form an "or" relationship.

In the description of the embodiments of the present application, the term "a plurality of" refers to two or more (including two), and similarly, "multiple groups" refers to two or more (including two) groups, and "multiple sheets" refers to two or more (including two) sheets.

In the descriptions of the embodiments of present application, orientations or positional relationships indicated by the technical terms "center", "longitudinal", "transverse", "length", "width", "thickness", "upper", "lower", "front", "rear", "left", "right", "vertical", "horizontal", "top", "bottom", "inner", "outer", "clockwise", "anticlockwise", "axial", "radial", "circumferential", and the like are based on orientations or positional relationships as shown in the drawings, and are only for the purpose of facilitating and simplifying the descriptions of the embodiments of the present application instead of indicating or implying that apparatuses or elements indicated must have particular orientations, and be constructed and operated in the particular orientations, so that these terms are not construed as limiting the embodiments of the present application.

In the description of the embodiments of the present application, unless otherwise expressly specified and limited, the technical terms "mount", "join", "connect", "fix", etc. should be understood in a broad sense, such as, a fixed connection, a detachable connection, or an integral connection; a mechanical connection, or an electrical connection; a direct connection, an indirect connection through an intermediate medium, an internal connection of two elements, or interaction between two elements. For those of ordinary skill in the art, the specific meanings of the above terms in embodiments of the present application can be understood according to specific situations.

At present, from the perspective of the development of the market situation, power batteries are more and more widely used. Power batteries are not only applied in energy storage power source systems such as water, fire, wind and solar power stations, but also widely applied in electric transport tools, such as electric bicycles, electric motorcycles, and electric vehicles, as well as many fields, such as military equipment and aerospace. With continuous expansion of the application field of power batteries, market demand is also constantly growing.

For a general battery cell, the battery cell includes an end cover, an electrode assembly, an insulating plate and a case. The insulating plate is generally arranged on a peripheral side of the electrode assembly. One end of the electrode assembly in a height direction is connected to the end cover and mounted in a space of the case. The end cover is connected to the case to seal the case. The inventors noticed that there is usually a gap between the electrode assembly and an inner wall of the case, especially a gap in the height direction of the electrode assembly is large. When the battery cell is subjected to external impact, an amplitude of the electrode assembly in its height direction is large. Due to influence from the electrode assembly, the insulating plate will also vibrate in the height direction of the electrode assembly, and even cause the insulating plate to abut against the end cover and deform. Moreover, since the insulating plate is close to the case, if the above-mentioned situation occurs during a connection process of the case and the end cover, the insulating plate will interfere with the connection position between the case and the end cover, which will seriously affect connection strength between the case and the end cover (for example, when the case and the end cover are connected by welding, the case and the end cover are poorly welded), lead to a risk of electrolyte leakage and cause potential safety hazards.

In order to improve quality of the battery, through research, the inventors have found that a barrier structure may be arranged between the connection position, that is between the case and the end cover, and the insulating plate to reduce a risk of interference of the insulating plate to the connection position, thereby reducing influence of the insulating plate on a connection process when the case and the end cover are connected, improving the connection strength between the case and the end cover, and improving quality of the battery cell.

Based on the above-mentioned considerations, through in-depth research, the inventors have designed a battery cell, a battery and an electrical apparatus.

An embodiment of the present application provides an electrical apparatus that uses a battery as a power supply, and the electrical apparatus may be, but is not limited to, a mobile phone, a tablet, a laptop, an electric toy, an electric tool, a battery vehicle, an electric vehicle, a ship, a spacecraft, etc. The electric toy may include fixed or mobile electric toys, such as game consoles, electric vehicle toys, electric ship toys, and electric airplane toys. The spacecraft may include airplanes, rockets, space shuttles, spaceships, etc.

For the convenience of description in the following embodiments, an electrical apparatus being a vehicle 1000 according to an embodiment of the present application is taken as an example for the description.

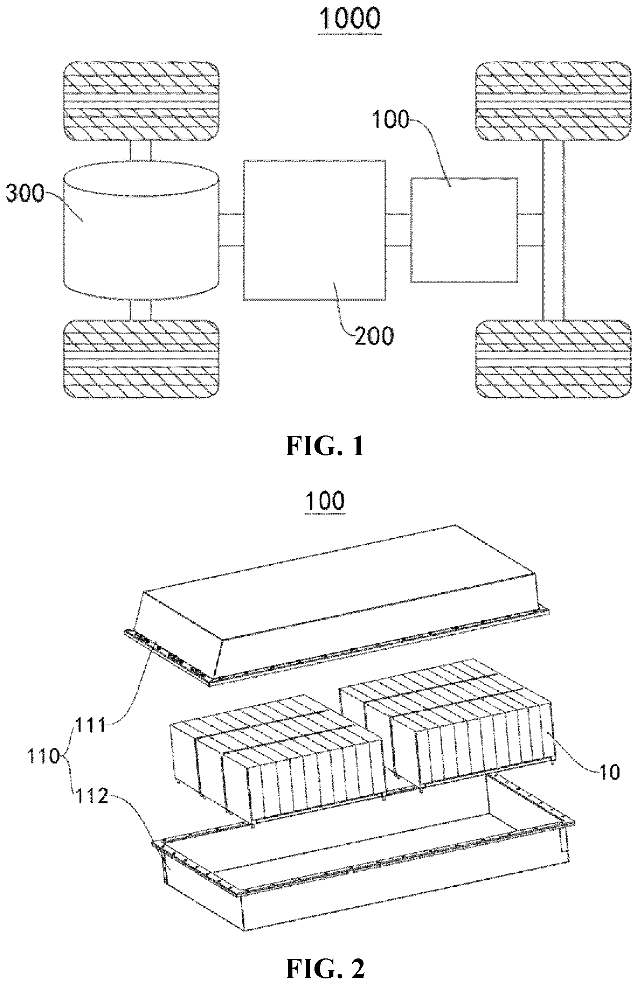

FIG. 1 is a schematic diagram of a structure of a vehicle 1000 according to some embodiments of the present application. As shown in FIG. 1, the vehicle 1000 may be a fuel vehicle, a gas vehicle or a new energy vehicle. The new energy vehicle may be an all-electric vehicle, a hybrid vehicle, an extended-range vehicle, etc. A battery 100 is arranged in the vehicle 1000. The battery 100 may be arranged at a bottom or head or tail of the vehicle 1000. The battery 100 may be used as a power supply for the vehicle 1000, for example, the battery 100 may be used as an operating power source for the vehicle 1000. The vehicle 1000 may further include a controller 200 and a motor 300. The controller 200 is configured to control the battery 100 to supply power to the motor 300, for example, to supply power for starting, navigation and driving of the vehicle 1000.

In some embodiments of the present application, the battery 100 not only may serve as the operating power supply of the vehicle 1000, but also may serve as a driving power supply of the vehicle 1000, so as to replace or partially replace fuel or natural gas to provide driving power for the vehicle 1000.

The battery mentioned in the embodiments of the present application refers to a single physical module including one or more battery cells to provide a higher voltage and capacity. For example, the battery mentioned in the present application may include a battery module, a battery pack, etc.

FIG. 2 is a schematic diagram of a structure of a battery 100 according to some embodiments of the present application. As shown in FIG. 2, in some embodiments of the present application, the battery 100 includes a box body 110. The box body 110 may include a first box body portion 111 and a second box body portion 112 connected to each other. A plurality of battery cells 10 are connected in parallel, in series, or in mixed connection and then placed in a space formed by connecting the first box body portion 111 and the second box body portion 112. The shapes of the first box body portion 111 and the second box body portion 112 may be determined according to the combined shape of the plurality of battery cells 10. The battery cell 10 may be in a cylindrical shape, a flat shape, a cuboid shape or another shape, which is also not limited in the embodiments of the present application. Encapsulating manners of the battery cell 10 include, but are not limited to, a cylindrical battery cell, a prismatic battery cell, a pouch cell 10, etc., which are also not limited in the embodiments the present application. In addition, the battery 100 may further include other structures, for example, a bus member, configured to electrically connect the plurality of battery cells 10.

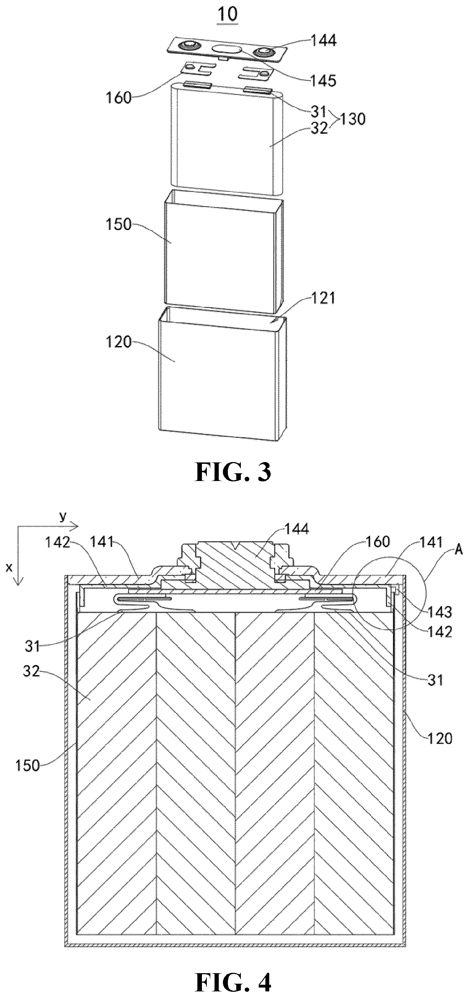

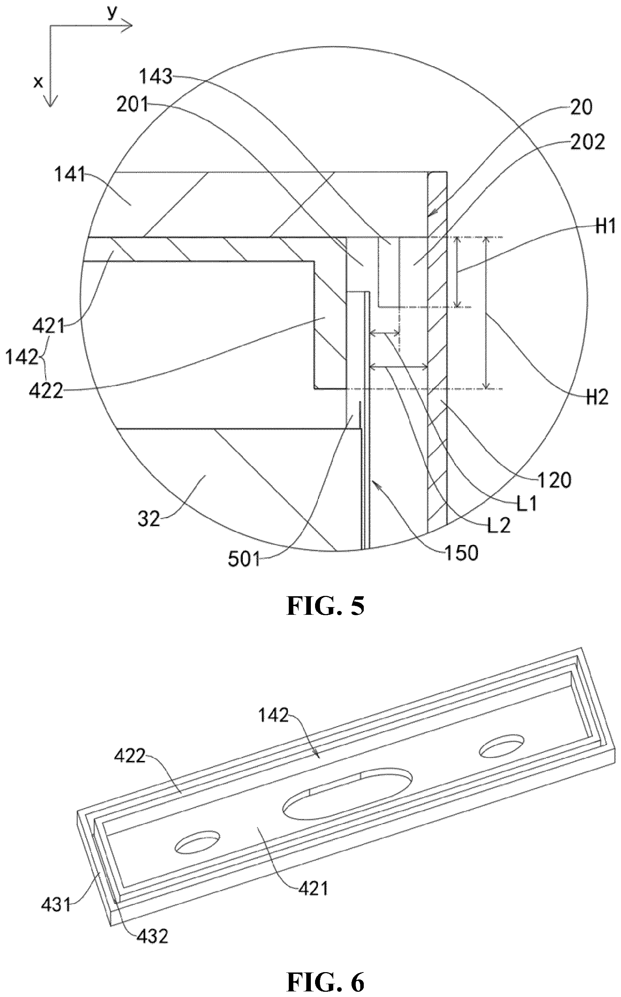

FIG. 3 is a schematic diagram of a structure of a battery cell 10 according to some embodiments of the present application. FIG. 4 is a schematic diagram of a cross-sectional structure of a battery cell 10 according to some embodiments of the present application. FIG. 5 is a schematic diagram of a structure of portion A in FIG. 4 in some embodiments. As shown in FIG. 3 to FIG. 5, in some embodiments of the present application, there is provided a battery cell 10, including a case 120, an electrode assembly 130, an end cover 141, a fixing member 142, an insulating plate 150, and a barrier member 143. The case 120 has an opening 121. The electrode assembly 130 is accommodated in the case 120. The end cover 141 is configured to cover the opening 121 and is connected to the case 120. The fixing member 142 is arranged on one side of the end cover 141 facing the electrode assembly 130 and is connected to the end cover 141. The insulating plate 150 is at least partially arranged between the electrode assembly 130 and the case 120. The insulating plate 150 is connected to the fixing member 142. The barrier member 143 is connected to at least one of the end cover 141 and the barrier member 143. The barrier member 143 is configured to isolate at least a portion of the insulating plate 150 from the connection position 20 between the end cover 141 and the case 120.

The case 120 is an assembly configured to form an internal environment of the battery cell 10. The formed internal environment may be configured to accommodate the electrode assembly 130, an electrolyte (not shown in the figure) and other components. The case 120 may be in various structural forms, such as a cuboid or a cylinder. Exemplarily, the shape of the case 120 may be determined according to the specific shape of the electrode assembly 130. The case 120 may be made of various materials, such as copper, iron, aluminum, stainless steel, aluminum alloy, and plastic, which is not specifically limited in the embodiments of the present application.

The electrode assembly 130 refers to an assembly, that is used for an electrochemical reaction, in the battery cell 10. Exemplarily, the electrode assembly 130 is mainly formed by winding or stacking a positive electrode plate and a negative electrode plate, and a separator is usually arranged between the positive electrode plate and the negative electrode plate. Portions of the positive electrode plate and the negative electrode plate having active materials constitute a main body portion 32 of the electrode assembly 130, and portions of the positive electrode plate and the negative electrode plate having no active materials respectively constitute tabs 31. During a charging or discharging process of the battery, the positive active material and the negative active material react with an electrolyte, and the tabs 31 are connected to an external circuit to form a current loop.

The end cover 141 refers to a component that covers the opening 121 of the case 120 to isolate the internal environment of the battery cell 10 from an external environment. The shape of the end cover 141 may be adapted to the shape of the case 120 to fit the case 120. Exemplarily, the end cover 141 may be made of a material with a certain hardness and strength (e.g., an aluminum alloy), so that the end cover 141 is not easy to deform when being subjected to extrusion and collisions, and structural strength of the battery cell 10 can be improved, thereby improving safety performance of the battery cell 10. The shape and size of the end cover 141 are adapted to the shape and size of the opening 121 of the case 120.

Referring to FIG. 5, the connection position 20 refers to a position where the end cover 141 is connected to the case 120. Taking welding as an example, the connection position 20 may be a position where the end cover 141 and the case 120 are in contact and welded together. For example, the end cover 141 covers the opening 121 of the case 120, and a peripheral side of the end cover 141 is in contact with and welded to an inner wall of the case 120 at the opening 121. The connection position 20 may refer to the position of a weld seam formed by welding.

The fixing member 142 refers to a component configured to insulate the end cover 142 from the electrode assembly 130. For example, it may be made of a plastic material, to isolate the end cover 141 from the electrode assembly 130. Exemplarily, the fixing member 142 may be lower plastic, the shape and size of the fixing member 142 are adapted to the end cover 141, and the fixing member 142 and the end cover 141 are arranged in a superimposing manner.

Referring to FIG. 5, the barrier member 143 refers to a member that isolates the insulating plate 150 from the connection position 20. For example, in a first direction (an x-axis direction in the figure), the barrier member 143 may divide a gap between the insulating plate 150 and the case 120 into a first portion 201 and a second portion 202. The first portion 201 is configured to accommodate the insulating plate 150, and the insulating plate 150 can move in the first portion 201. The connection position 20 is located in the second portion 202. When the insulating plate 150 has a tendency to move towards the connection position 20, it can be intercepted by the barrier member 143 that separates the first portion 201 and the second portion 202, that is, interference of the insulating plate 150 to the connection position 20 is reduced. Exemplarily, the shape and size of the barrier member 143 are adapted to the shape of the gap between the insulating plate 150 and the case 120. For example, the barrier member may be a protrusion, a plate-like or annular boss, etc.

The insulating plate 150 refers to a member that isolates the electrode assembly 130 from the case 120, which can reduce a risk of short circuit caused by contact between the electrode assembly 130 and the case 120. The insulating plate 150 may be wrapped around a periphery of a main body portion 32 of the electrode assembly 130, and can isolate the main body portion 32 from the case 120 in a plurality of directions. Exemplarily, the insulating plate may specifically be a box structure formed by folding a plate-like member, and may be made of a plastic or rubber material. The insulating plate 150 is arranged in the case 120. The insulating plate 150 is configured to isolate at least a portion of the electrode assembly 130 from the case 120.

By arranging the barrier member 143 to isolate the insulating plate 150 from the connection position 20, the position where the case 120 is connected to the end cover 141 can be in a relatively independent environment, so that interference of the insulating plate 150 to the connection position 20 can be reduced, connection quality between the case 120 and the end cover 141 can be improved, and a risk of electrolyte leakage can be reduced, thereby improving safety.

Exemplarily, when the case 120 and the end cover 141 are connected by welding, the insulating plate 150 can be prevented from affecting a welding process, and a risk of poor welding between the case 120 and the end cover 141 can be significantly reduced, thereby improving quality of the battery.

Optionally, functional components such as an electrode terminal 144 and a pressure relief mechanism 145 may be further arranged on the end cover 141. The electrode terminal 144 may be configured to be electrically connected to a tab 31 of the electrode assembly 130 for outputting or inputting electrical energy of the battery cell 10. The pressure relief mechanism 145 may be configured to release an internal pressure of the battery cell 10, when the internal pressure or temperature of the battery cell 10 reaches a threshold.

Optionally, the end cover 141 and the fixing member 142 may be provided with a channel-shaped structure adapted to the electrode terminal 144 and the pressure relief mechanism 145.

Optionally, taking the barrier member 143 that is in the shape of a plate as an example, one side of the plate in a length direction may be connected to one side of the end cover 141 facing the fixing member 142, and the other side of the plate in the length direction is arranged in the gap between the insulating member and the case 120.

Optionally, taking the barrier member 143 that is in the shape of a plate as an example, one side of the plate in a length direction may be connected to one end face of the fixing member 142 facing the case 120, and the other side of the plate in the length direction is arranged in the gap between the insulating member and the case 120.

Optionally, the battery cell 10 may further include an adapter plate 160. The adapter plate 160 is configured to connect the tab 31 and the electrode terminal 144.

As shown in FIG. 3 to FIG. 5, in some optional embodiments of the present application, one end of the insulating plate 150 facing the end cover 141 has a first connecting portion 501. The first connecting portion 501 is arranged around the fixing member 142 and connected to the fixing member 142. At least a portion of the barrier member 143 is located on one side of the first connecting portion 501 away from the fixing member 142.

The first connecting portion 501 refers to a portion where the insulating plate 150 is superposed on and in contact with the fixing member 142. The first connecting portion 501 is arranged around a peripheral side of the fixing member 142 and is connected to the fixing member 142, such as by hot-melt connection.

By arranging the first connecting portion 501, the connection of the insulating plate 150 to the fixing member 142 can be facilitated, and an effect of the insulating plate 150 isolating the electrode assembly 130 from the case 120 can be improved. Furthermore, the barrier member 143 is arranged on one side of the first connecting portion 501 away from the fixing member 142, so that the first connecting portion 501 can be isolated from the case 120, thereby preventing the first connecting portion 501 from interfering with the connection position 20.

Optionally, one side wall of the first connecting portion 501 away from the case 120 is connected to one side wall of the fixing member 142 close to the case 120.

As shown in FIG. 3 to FIG. 5, in some optional embodiments of the present application, the fixing member 142 includes a fixing body 421 and a second connecting portion 422 arranged around the periphery of the fixing body 421, and the first connecting portion 501 is arranged around the second connecting portion 422 and is fixed to the second connecting portion 422.

The second connecting portion 422 refers to a portion of the fixing member 142 that protrudes from the fixing body 421 and extends towards one side of the electrode assembly 130, which enables the fixing member 142 to obtain a larger surface in a direction perpendicular to the thickness of the end cover 141, and facilitates the connection of the first connecting portion 501 to the fixing member 142. For example, the side wall of the first connecting portion 501 away from the case 120 and one side wall of the second connecting portion 422 close to the case 120 are stacked and connected with each other. Exemplarily, the second connecting portion 422 may be a protrusion, a plate-like or annular boss, etc.

By arranging the second connecting portion 422, a connecting structure can be formed on the fixing member 142, thereby facilitating the connection of the first connecting portion 501 to the fixing member 142.

As shown in FIG. 3 to FIG. 5, in some optional embodiments of the present application, the barrier member 143 is a protrusion extending along the thickness direction of the end cover 141.

By setting the barrier member 143 as the protrusion that extends along the thickness direction of the end cover 141, the barrier member 143 is relatively simple in structure, and an internal structure of the battery cell 10 can be optimized.

Optionally, the thickness direction of the end cover 141 may be parallel to a height direction of the main body portion 32 of the electrode assembly 130.

As shown in FIG. 3 to FIG. 5, In some optional embodiments of the present application, in the thickness direction (the x-axis direction in the figure) of the end cover 141, the size of the second connecting portion 422 is H1, the size of the barrier member 143 is H2, satisfying 0<H2/H1 ≤ 1.

By limiting the size of the barrier member 143 in the thickness direction, the size of the barrier member 143 in the thickness direction can be prevented from being too small, so that the barrier 143 has an insignificant barrier effect on the insulating plate 150, and furthermore, the size of the barrier member 143 in the thickness direction does not exceed the size of the fixing member 142, which can also reduce a risk of interference with the electrode assembly 130 caused by the excessive size of the barrier member 143 in the thickness direction, and reduce a space occupied by the barrier member 143, thereby improving energy density.

Optionally, satisfying H2/H1 may be equal to 0.1, 0.2, 0.3, 0.4, 0.5, 0.6, 0.7, 0.8 or 0.9. Optionally, satisfying 0.2 ≤ H2/H1 ≤ 0.8.

In some optional embodiments of the present application, the barrier member 143 and the case 120 are spaced apart from each other.

By spacing barrier member 143 and the case 120 apart from each other, a certain redundant space can be present between the barrier member 143 and the case 120, thereby reducing interference of the barrier member 143 to the connection position 20.

As shown in FIG. 3 to FIG. 5, in some optional embodiments of the present application, along a first direction (a y-axis direction in the figure), a distance from the insulating plate 150 to the case 120 is L1, a distance from one side of the barrier member 143 close to the case 120 to the insulating plate 150 is L2, satisfying 0.02 ≤ L2/L1<1, and the first direction is perpendicular to the thickness direction of the end cover 141.

By limiting the size of the barrier member 143 in the first direction, the barrier member 143 has a certain thickness in the first direction to prevent the barrier member 143 from being too thin, resulting in insufficient strength of the barrier member 143, and furthermore, the thickness of the barrier member 143 in the first direction is smaller than the redundancy between the case 120 and the insulating plate 150 to prevent the barrier member 143 from being too large and squeezing the insulating plate 150 and the case 120 on both sides.

Optionally, satisfying L2/L1 may be equal to 0.05, 0.1, 0.2, 0.3, 0.4, 0.5, 0.6, 0.7, 0.8 or 0.9. Optionally, satisfying 0.5 ≤ L2/L1 ≤ 0.75.

FIG. 6 is a schematic diagram of a structure of a fixing member 142 according to some embodiments of the present application. As shown in FIG. 6, in some optional embodiments of the present application, the barrier member 143 completely surrounds the fixing member 142.

By arranging the barrier member 143 to completely surround the fixing member 142, the barrier member 143 is arranged on a whole peripheral side of the fixing member 142, and the whole peripheral side of the insulating plate 150 can be isolated from the connection position 20, thereby effectively improving an isolation effect.

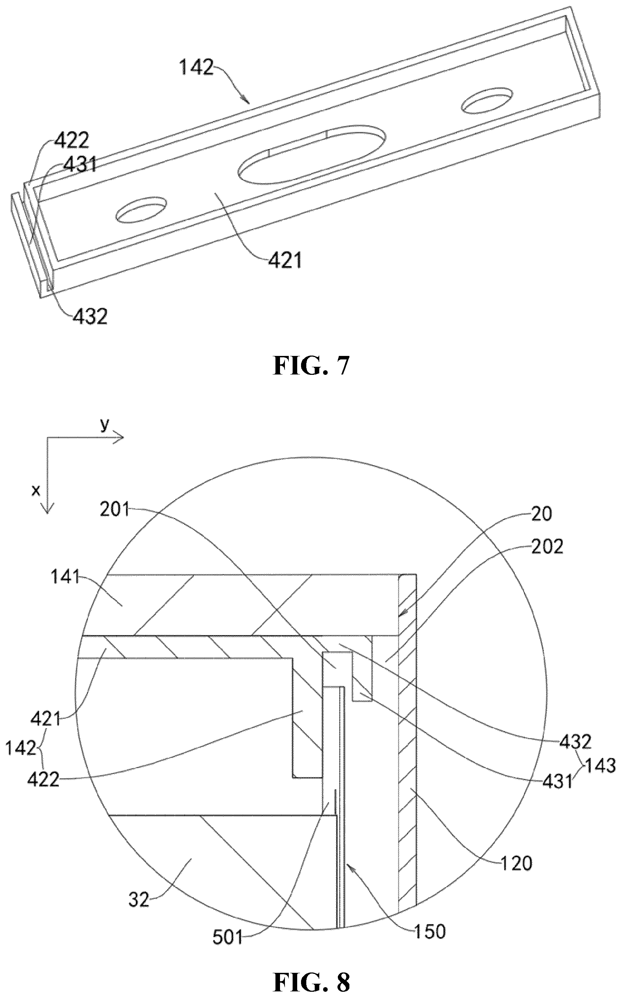

FIG. 7 is a schematic diagram of a structure of a fixing member 142 according to some other embodiments of the present application. Referring to FIG. 7, optionally, the barrier member 143 may be arranged corresponding to a local area of the fixing member 142.

In some optional embodiments of the present application, there are a plurality of barrier members 143, and the plurality of barrier members 143 are arranged at intervals along the circumferential direction of the fixing member 142.

By arranging the plurality of barrier members 143 at intervals, the barrier members 143 can be arranged at local areas (positions where the insulating plate 150 is easy to move) according to the actual use of the battery cell 10, thereby realizing an isolation effect between the insulating plate 150 and the connection position 20 while reducing the occupation of the barrier members 143 on an internal space of the battery cell 10.

FIG. 8 is a schematic diagram of a structure of portion A in FIG. 4 in some other embodiments. As shown in to FIG. 6 to FIG. 8, in some optional embodiments of the present application, the barrier member 143 and the fixing member 142 are integrally molded. By integrally molding the barrier member 143 and the fixing member 142, a number of parts of the battery cell 10 can be reduced, thereby facilitating assembly of the battery cell 10.

Optionally, the barrier member 143 may include a third connecting portion 432 and a barrier body 431. The third connecting portion 432 extends along the first direction. The barrier body 431 extends along the thickness direction of the end cover 141. A top end of the barrier body 431 along the thickness direction of the end cover 141 is connected to the third connecting portion 432. The top end of the third connecting portion 432 along the thickness direction of the end cover 141 is in contact with the end cover 141. One side of the third connecting portion 432 away from the case 120 is connected to one side of the second connecting portion 422 along the first direction close to the case 120.

Alternatively, the barrier member 143 may be connected to the fixing member 142 by welding or bonding.

In some optional embodiments of the present application, the barrier member 143 and the end cover 141 are integrally molded. By integrally molding the barrier member 143 and the end cover 141, a number of parts of the battery cell 10 can be reduced, thereby facilitating assembly of the battery cell 10.

Alternatively, the barrier member 143 may be connected to the end cover 141 by welding or bonding.

In some optional embodiments of the present application, the fixing member 142 is made of an insulating material. By setting the fixing member 142 to be made of the insulating material, insulativity of one side of the end cover 141 can be improved.

Optionally, the fixing member 142 may be made of one or more of polysulfone, polyarylate, polytetrafluoroethylene, polyimide, polystyrene, polypropylene, polyethylene, polyurethane, furan, allyl ester, phenolic, unsaturated polyester, silicone, amino plastic, polycarbonate, thermoplastic polyester, nylon, modified polyphenylene ether, thermoplastic polyester, etc.

In some optional embodiments of the present application, there is provided a battery, including the above-mentioned battery cell 10.

In some optional embodiments of the present application, there is provided an electrical apparatus, including the above-mentioned battery cell 10, configured to supply electric energy.

In a first aspect of embodiments of the present application, there is provided a battery cell 10, including a case 120, an electrode assembly 130, an end cover 141, a fixing member 142, an insulating plate 150, and a barrier member 143. The case 120 has an opening 121. The electrode assembly 130 is accommodated in the case 120. The end cover 141 is configured to cover the opening 121. At the connection position 20, the end cover 141 is connected to the case 120. The fixing member 142 is arranged on one side of the end cover 141 facing the electrode assembly 130 and is connected to the end cover 141. The barrier member 143 is connected to at least one of the end cover 141 and the barrier member 143. The insulating plate 150 is arranged in the case 120. The insulating plate 150 is configured to insulate and isolate at least a portion of the electrode assembly 130 from the case 120. The barrier member 143 is configured to isolate at least a portion of the insulating plate 150 from the connection position 20. One end of the insulating plate 150 facing the end cover 141 has a first connecting portion 501. The first connecting portion 501 is arranged around the fixing member 142 and connected to the fixing member 142. At least a portion of the barrier member 143 is located on one side of the first connecting portion 501 away from the fixing member 142. The fixing member 142 includes a fixing body 421 and a second connecting portion 422 arranged around the periphery of the fixing body 421, and the first connecting portion 501 is arranged around second connecting portion 422 and is fixed to the second connecting portion 422. In the thickness direction of the end cover 141, the size of the second connecting portion 422 is H1, the size the barrier member 143 is H2, satisfying 0.2 ≤ H2/H1 ≤ 0.8. The barrier member 143 and the case 120 are spaced apart from each other. Along a first direction, a distance from the insulating plate 150 to the case 120 is L1, a distance from one side of the barrier member 143 close to the case 120 to the insulating plate 150 is L2, satisfying 0.05 ≤ L2/L1 ≤ 0.75, and the first direction is perpendicular to the thickness direction of the end cover 141. The barrier member 143 completely surrounds the fixing member 142. The barrier member 143 and the fixing member 142 are integrally formed. The fixing member 142 is made of an insulating material.

Although the present application has been described with reference to the preferred embodiments, various improvements can be made thereto and components thereof can be replaced with equivalents without departing from the scope of the present application. In particular, the technical features mentioned in the various embodiments can be combined in any manner as long as there is no structural conflict. The present application is not limited to the specific embodiments disclosed herein, but includes all technical solutions falling within the scope of the claims.

## Claims

1. A battery cell, comprising:
a case, having an opening;
an electrode assembly, accommodated in the case;
an end cover, configured to cover the opening and connected to the case;
a fixing member, arranged on one side of the end cover facing the electrode assembly and connected to the end cover;
an insulating plate, at least partially arranged between the electrode assembly and the case, wherein the insulating plate is connected to the fixing member; and
a barrier member, connected to at least one of the end cover and the barrier member, wherein the barrier member is configured to isolate at least a portion of the insulating plate from the connection position between the end cover and the case.

2. The battery cell according to claim 1, wherein one end of the insulating plate facing the end cover has a first connecting portion, the first connecting portion is arranged around the fixing member and connected to the fixing member, and at least a portion of the barrier member is located on one side of the first connecting portion away from the fixing member.

3. The battery cell according to claim 2, wherein the fixing member comprises a fixing body and a second connecting portion arranged around the periphery of the fixing body, and the first connecting portion is arranged around the second connecting portion and is fixed to the second connecting portion.

4. The battery cell according to any one of claims 1 to 3, wherein the barrier member is a protrusion extending along the thickness direction of the end cover.

5. The battery cell according to claim 3, wherein in the thickness direction of the end cover, the size of the second connecting portion is H1, the size of the barrier member is H2, satisfying 0<H2/H1 ≤ 1.

6. The battery cell according to any one of claims 1 to 5, wherein the barrier member and the case are spaced apart from each other.

7. The battery cell according to claim 6, wherein along a first direction, a distance from the insulating plate to the case is L1, a distance from one side of the barrier member close to the case to the insulating plate is L2, satisfying 0.02 ≤ L2/L1<1, and the first direction is perpendicular to the thickness direction of the end cover.

8. The battery cell according to any one of claims 1 to 7, wherein the barrier member completely surrounds the fixing member.

9. The battery cell according to any one of claims 1 to 7, wherein there are a plurality of barrier members, and the plurality of barrier members are arranged at intervals along the circumferential direction of the fixing member.

10. The battery cell according to any one of claims 1 to 9, wherein the barrier member and the fixing member are integrally molded.

11. The battery cell according to any one of claims 1 to 9, wherein the barrier member and the end cover are integrally molded.

12. The battery cell according to any one of claims 1 to 11, wherein the fixing member is made of an insulating material.

13. A battery, comprising the battery cell according to any one of claims 1 to 12.

14. An electrical apparatus, comprising the battery cell according to any one of claims 1 to 12, the battery cell being configured to provide electric energy.
